# EUROPEAN PATENT APPLICATION

(11) **EP 3 336 312 A1**
(43) Date of publication of application: **20.06.2018**
(21) Application number: 17204330.9
(22) Date of filing: 29.11.2017
(51) Int. Cl.: F01D 5/18

(54) **COOLING ASSEMBLY FOR A TURBINE ASSEMBLY**

(30) Priority: 15.12.2016 US 201615379988
(71) Applicant: General Electric Company, Schenectady, NY 12345 (US)
(72) Inventor: DYSON, Thomas Earl, Niskayuna, NY 12309 (US); GETSINGER, Daniel Robinson, Niskayuna, NY 12309 (US); RATHAY, Nicholas William, Niskayuna, NY 12309 (US)
(74) Representative: Lee, Brenda

(57) **Abstract**

A cooling assembly 100 comprises a cooling chamber 102 disposed inside a turbine assembly. The cooling chamber is configured to direct cooling air inside one or more of a combustion chamber or an airfoil 104 of the turbine assembly. An orthogonally converging diffusing (OCD) conduit is fluidly coupled with the cooling chamber. The OCD conduit 106 is configured to direct at least some of the cooling air out of the cooling chamber outside of an exterior surface of the one or more of the combustion chamber or the airfoil. The OCD conduit is elongated along and encompasses an intersection between a constricting plane 205 and a diffusing plane 207 that are traverse to each other. The OCD conduit has an interior surface with a first distance between opposing first portions of the interior surface. The first distance increases in the diffusing plane at increasing distances along the intersection from the cooling chamber toward the exterior surface. The interior surface of the OCD conduit has a second distance between opposing second portions of the interior surface of the OCD conduit. The second distance between opposing second portions decreases in the constricting plane at the increasing distances along the intersection from the cooling chamber toward the exterior surface.

## Description

### FIELD

The subject matter described herein relates to cooling turbine assemblies.

### BACKGROUND

The turbine assembly can be subjected to increased heat loads when an engine is operating. To protect the turbine assembly components from damage, cooling fluid may be directed in and/or onto the turbine assembly. Component temperature can then be managed through a combination of impingement onto, cooling flow through passages in the component, and film cooling with the goal of balancing component life and turbine efficiency. Improved efficiency can be achieved through increasing the firing temperature, reducing the cooling flow, or a combination.

One issue with cooling known turbine assemblies is inadequate coolant coverage on the surface of the assembly components. Inadequate coolant coverage may cause the average and/or local turbine assembly component surface temperatures to remain excessively high, which increases the total heat load of the turbine assembly and may reduce part life below acceptable levels or require us of additional cooling fluid. Therefore, an improved system may provide improved cooling coverage and thereby reduce the average and/or local surface temperature of critical portions of the turbine assembly, enable more efficient operation of the engine, and/or improve the life of the turbine machinery.

### BRIEF DESCRIPTION

In one embodiment, a cooling assembly comprises a cooling chamber disposed inside a turbine assembly. The cooling chamber is configured to direct cooling air inside one or more of a combustion chamber or an airfoil of the turbine assembly. An orthogonally converging diffusing (OCD) conduit is fluidly coupled with the cooling chamber. The OCD conduit is configured to direct at least some of the cooling air out of the cooling chamber outside of an exterior surface of the one or more of the combustion chamber or the airfoil. The OCD conduit is elongated along and encompasses an intersection between a constricting plane and a diffusing plane that are traverse to each other. The OCD conduit has an interior surface with a first distance between opposing first portions of the interior surface. The first distance increases in the diffusing plane at increasing distances along the intersection from the cooling chamber toward the exterior surface. The interior surface of the OCD conduit has a second distance between opposing second portions of the interior surface of the OCD conduit. The second distance between opposing second portions decreases in the constricting plane at the increasing distances along the intersection from the cooling chamber toward the exterior surface.

In one embodiment, a cooling assembly comprises a cooling chamber disposed inside a turbine assembly. The cooling chamber is configured to direct cooling air inside one or more of a combustion chamber or an airfoil of the turbine assembly. An orthogonally converging diffusing (OCD) conduit is fluidly coupled with the cooling chamber. The OCD conduit is configured to direct at least some of the cooling air out of the cooling chamber outside of an exterior surface of the one or more of the combustion chamber or the airfoil. The OCD conduit is elongated along and encompasses an intersection between a constricting plane and a diffusing plane that are traverse to each other. The OCD conduit has an interior surface with a first distance between opposing first portions of the interior surface. The first distance increases in the diffusing plane at increasing distances along the intersection from the cooling chamber toward the exterior surface. The interior surface of the OCD conduit has a second distance between opposing second portions of the interior surface of the OCD conduit. The second distance between opposing second portions decreases in the constricting plane at the increasing distances along the intersection from the cooling chamber toward the exterior surface. The OCD conduit comprises a first cross-sectional shape at an interior intersection between the OCD conduit and the cooling chamber, and the OCD conduit comprises a different second cross-sectional shape at an exterior intersection between the OCD conduit and the exterior surface. The first cross-sectional shape has a first area and the second cross-sectional shape has a second area that is different than the first area.

In one embodiment, a cooling assembly comprises a cooling chamber disposed inside a turbine assembly. The cooling chamber is configured to direct cooling air inside one or more of a combustion chamber or an airfoil of the turbine assembly. An orthogonally converging diffusing (OCD) conduit is fluidly coupled with the cooling chamber. The OCD conduit is configured to direct at least some of the cooling air out of the cooling chamber outside of an exterior surface of the one or more of the combustion chamber or the airfoil. The OCD conduit is elongated along and encompasses an intersection between a constricting plane and a diffusing plane that are traverse to each other. The OCD conduit has an interior surface with a first distance between opposing first portions of the interior surface. The first distance increases in the diffusing plane at increasing distances along the intersection from the cooling chamber toward the exterior surface such that a flow area through which at least some of the cooling air flows expands in the diffusing plane along the intersection between the cooling chamber toward the exterior surface. The interior surface of the OCD conduit has a second distance between opposing second portions of the interior surface of the OCD conduit. The second distance between the opposing second portions decreases in the constricting plane at the increasing distances along the intersection from the cooling chamber toward the exterior surface such that the flow are through which the at least some of the cooling air flows contracts in the constricting plane along the intersection between the cooling chamber toward the exterior surface.

### BRIEF DESCRIPTION OF THE DRAWINGS

The present inventive subject matter will be better understood from reading the following description of non-limiting embodiments, with reference to the attached drawings, wherein below:
Figure 1 illustrates a turbine assembly in accordance with one embodiment;
Figure 2 illustrates a cross-sectional view of a cooling assembly in accordance with one embodiment;
Figure 3 illustrates a detailed perspective view of an orthogonally converging diffusing (OCD) conduit of the airfoil of Figure 1 in accordance with one embodiment;
Figure 4 illustrates a top view of the OCD conduit of Figure 3 in accordance with one embodiment;
Figure 5 illustrates a side view of the OCD conduit of Figure 3 in accordance with one embodiment;
Figure 6A illustrates a front view of an orthogonally converging diffusing (OCD) conduit at an interior intersection in accordance with one embodiment;
Figure 6B illustrates a front view the OCD conduit of Figure 5A at an exterior intersection in accordance with one embodiment;
Figure 7 illustrates a size chart of an increasing distance along an intersection in accordance with one embodiment;
Figure 8 illustrates an area ratio graph along an intersection in accordance with one embodiment;
Figure 9 illustrates a perspective view of a cooling assembly in accordance with one embodiment;
Figure 10 illustrates a cross-sectional view of a cooling assembly in accordance with one embodiment; and
Figure 11 illustrates a method flowchart in accordance with one embodiment.

### DETAILED DESCRIPTION

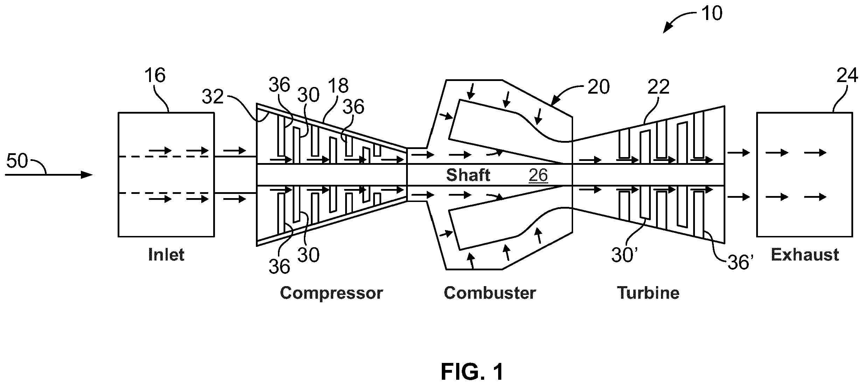

Figure 1 illustrates a turbine assembly 10 in accordance with one embodiment. The turbine assembly 10 includes an inlet 16 through which air enters the turbine assembly 10 in the direction of arrow 50. The air travels in the direction 50 from the inlet 16, through the compressor 18, through a combustor 20, and through a turbine 22 to an exhaust 24. A rotating shaft 26 runs through and is coupled with one or more rotating components of the turbine assembly 10.

The compressor 18 and the turbine 22 comprise multiple airfoils. The airfoils may be one or more of blades 30, 30' or guide vanes 36, 36'. The blades 30, 30' are axially offset from the guide vanes 36, 36' in the direction 50. The guide vanes 36, 36' are stationary components. The blades 30, 30' are operably coupled with and rotate with the shaft 26.

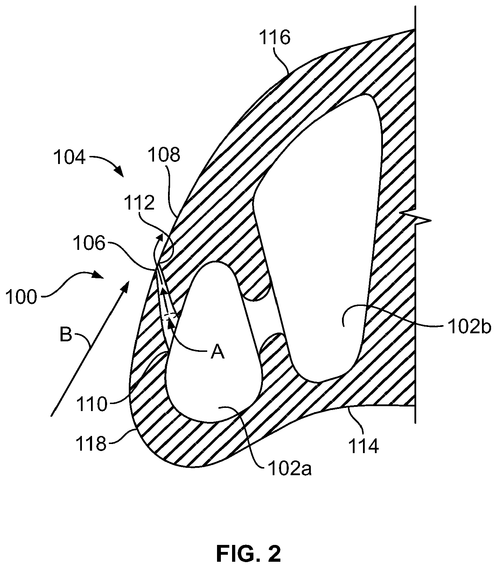

Figure 2 illustrates a cross-sectional view of a cooling assembly 100 of the turbine assembly 10 (of Figure 1) in accordance with one embodiment. The cooling assembly 100 may operate to help cool an airfoil 104 of the turbine assembly (or another component, such as a combustion liner, blade shroud, blade tip, vane endwall, or the like of the turbine assembly). The airfoil 104 may be a turbine blade (e.g., blades 30, 30' of Figure 1), a stationary guide vane (e.g., guide vanes 36, 36' of Figure 1), or the like, used in the turbine assembly 10 (of Figure 1). The airfoil 104 has a pressure side 114 and a suction side 116 that is opposite the pressure side 114. The pressure side 114 and the suction side 116 are interconnected by a leading edge 118 and a trailing edge (not shown) that is opposite the leading edge 118. The pressure side 114 is generally concave in shape, and the suction side 116 is generally convex in shape between the leading and trailing edges of the airfoil 104. For example, the generally concave pressure side 114 and the generally convex suction side 116 provides an aerodynamic surface over which compressed working fluid flows through the turbine assembly in the direction B.

The airfoil 104 has one or more internal cooling chambers 102a, 102b. In the illustrated embodiment, the airfoil 104 has two cooling chambers 102a, 102b. Optionally, the airfoil 104 may include any number of cooling chambers. The cooling chambers 102 are disposed within the interior of the airfoil 104. For example, the cooling chambers 102 are entirely contained within the airfoil 104 between the pressure side 114 and suction side 116. In the illustrated embodiment, the cooling chambers 102 have a closed curve cross-sectional shape. Optionally, the cooling chambers 102 may be any alternative shape and/or size. The cooling chambers 102 are configured to direct cooling air inside of the airfoil 104 in order to cool the airfoil 104 when the turbine assembly is operating.

The cooling chamber 102a is fluidly coupled with an orthogonally converging diffusing (OCD) conduit 106. In the illustrated embodiment, one OCD conduit 106 fluidly couples the cooling chamber 102a with an exterior surface 108. Optionally, the airfoil 104 may include any number of OCD conduits fluidly coupling any number of cooling chambers with the exterior surface 108. The OCD conduit 106 is a passage that is disposed between and fluidly couples the cooling chambers 102 with the exterior of the airfoil 104 (e.g., with the exterior surface 108 of the airfoil 104 or an exterior surface of any other component over which cooling air flows). The OCD conduit 106 directs at least some of the cooling air exiting the cooling chamber 102a in a direction A outside of the exterior surface 108. For example, the OCD conduit 106 directs the cooling air exiting the cooling chamber 102a in the direction A along the exterior surface 108 of the airfoil 104. In the illustrated example of Figure 2, the OCD conduit 106 is fluidly coupled between the cooling chamber 102a and the exterior surface 108 on the suction side 116 of the airfoil 104. Optionally, one or more OCD conduits 106 may be coupled between the one or more cooling chambers 102 and the exterior surface 108 on the pressure side 114 of the airfoil 104. Optionally, the cooling assembly 100 may comprise one or more OCD conduits 106 fluidly coupling the cooling chambers 102 with the exterior surface 108 at any other location on the pressure and/or suction sides 114, 116 of the airfoil 104.

As described herein, the OCD conduit 106 may be shaped to restrict an airflow path within the OCD conduit 106 through which the cooling air flows out of the cooling chamber 102 within a first plane (referred to herein as a constricting plane) and also be shaped to widen an airflow path within the OCD conduit 106 through which the cooling air flows out of the cooling chamber 102 within a different, second plane (referred to herein as a diffusing plane). The OCD conduit 106 can be shaped in this manner in order to improve the coverage of the cooling air along the exterior surface of the airfoil and to reduce a diffuser stall (e.g., wherein the cooling air becomes detached from one or more conduit surfaces). For example, one plane constricts while the other plane expands in order to increase the flow area and reduce the velocity of the cooling air flowing out of the OCD conduit 106.

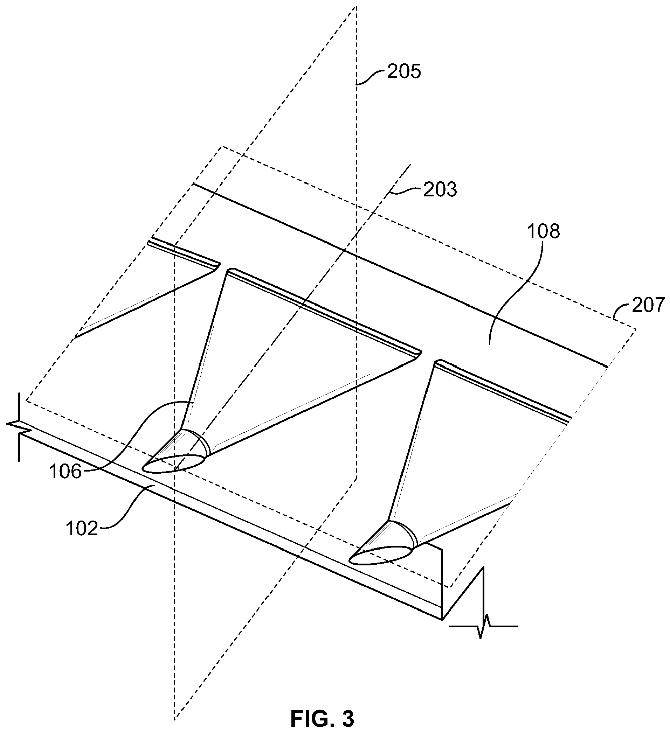

Figure 3 illustrates a detailed perspective view of the OCD conduit 106 of the airfoil 104 in accordance with one embodiment. A two-dimensional constricting plane 205 and a two-dimensional diffusing plane 207 that is perpendicular to the constricting plane 205 intersect each other along an elongated and/or linear intersection 203. For example, the constricting and diffusing planes 205, 207 are transverse to each other. The OCD conduit 106 is elongated along and encompasses the intersection 203 of the constricting plane 205 and the diffusing plane 207. For example, the intersection 203 may extend through the center of the OCD conduit 106, with the OCD conduit 106 being symmetric or substantially symmetric (symmetric within manufacturing tolerances) about or on either side of the intersection 203 in the constricting plane 205. The OCD conduit 106 also may be symmetric or substantially symmetric about or on either side of the intersection 203 in the diffusing plane 207. Optionally, the OCD conduit 106 may be asymmetric or substantially asymmetric about or on either side of the intersection 203 in one or more of the constricting plane 205 or the diffusing plane 207.

Returning to the description of the cooling assembly 100 in Figure 2, the illustrated embodiment of the view of Figure 2 is a cross-sectional view of the airfoil 104 in the constricting plane 205. The two-dimensional diffusing plane 207, which is perpendicular to the two-dimensional constricting plane 205, extends into and out of the plane shown in the two-dimensional representation of Figure 2. For example, in the illustrated embodiment the constricting plane 205 is parallel with the cross-sectional view of the airfoil 104. Optionally, the constricting plane 205 may not be parallel with the cross-sectional view of the airfoil 104.

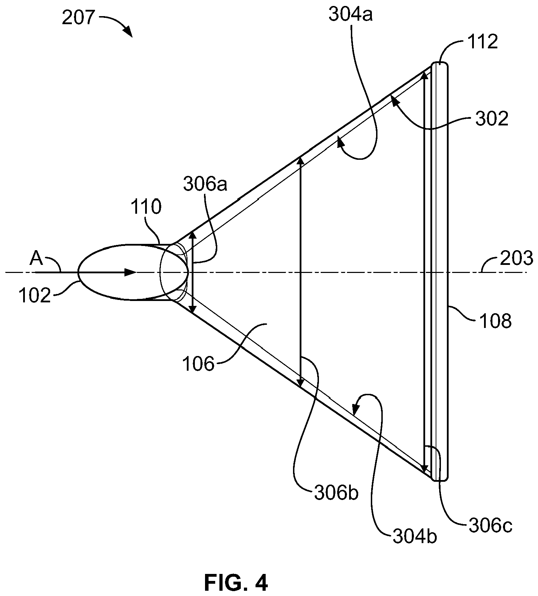

Figure 4 illustrates a top view of the OCD conduit 106 of the airfoil 104 in the diffusing plane 207 in accordance with one embodiment. The two-dimensional constricting plane 205, which is perpendicular to the diffusing plane 207, extends into and out of the plane shown in the two-dimensional representation of Figure 3. The OCD conduit 106 has an interior surface 302 that extends around an outer periphery of the intersection 203. The interior surface 302 is open to the cooling chamber 102 at an interior intersection 110 between the OCD conduit 106 and the cooling chamber 102. An inlet into the OCD conduit 106 at the interior intersection 110 may be generally round, elliptical, oval, square or the like. Additionally, the interior surface 302 is open to the exterior surface 108 at an exterior intersection 112 between the OCD conduit 106 and the exterior surface 108. An outlet out of the OCD conduit 106 at the exterior intersection 112 may be generally round, elliptical, oval, square, or the like. For example, the OCD conduit 106 is an open passage between the cooling chamber 102 and the exterior surface 108.

The OCD conduit 106 is elongated along the intersection 203 of the constricting and diffusing planes 205, 207 between the cooling chamber 102 and the exterior surface 108. The interior surface 302 of the OCD conduit 106 has opposing first portions 304a, 304b. The OCD conduit 106 encompasses the intersection 203 along the diffusing plane 207 such that the intersection 203 is generally centered between the opposing first portions 304a, 304b of the interior surface 302 in the diffusing plane 207. For example, the opposing first portions 304a, 304b of the interior surface 302 are generally mirrored about the intersection 203 between the cooling chamber 102 and the exterior surface 108. Optionally, the first portions 304a, 304b may not be mirrored about the intersection 203.

The OCD conduit 106 has a first distance 306 between the opposing first portions 304a, 304b of the interior surface 302. The first distance 306 increases in the diffusing plane 207 at increasing distances along the intersection 203 in a direction A from the cooling chamber 102 toward the exterior surface 108. For example, the first distance 306 may be the distance measured along the shortest path between opposing first portions 304a, 304b of the interior surface 302 of the OCD conduit 106. This first distance 306 may continually increase at increasing distances along the intersection 203. For example, the first distance 306a may be smallest at or near the interior intersection 110, but may increase at increasing distances along the intersection 203 in the diffusing plane 207. The first distance 306b may be larger at or near the middle of the OCD conduit 106 along the intersection 203, and may be largest (e.g., as the distance 306c) at or near the exterior intersection 112. For example, the first distance 306a, disposed near the interior intersection 110, has a distance less than the first distance 306b, and has a distance less than the first distance 306c (e.g., distance 306a < distance 306b < distance 306c). For example, the first distance 306c, disposed near the exterior intersection 112, has a distance greater than the first distance 306b, and has a distance greater than the first distance 306a.

The first distance 306 increases in the diffusing plane 207 at increasing distances along the intersection 203 from the cooling chamber 102 toward the exterior surface 108 such that a flow area through which at least some of the cooling air flows in the direction A expands in the diffusing plane 207 along the intersection 203. The cooling air expands in the diffusing plane 207 along the intersection 203 between the cooling chamber 102 and the exterior surface 108. For example, the flow area of the OCD conduit 106 in the diffusing plane 207 is greater near the exterior intersection 112 than the flow area of the OCD conduit 106 in the diffusing plane 207 near the interior intersection 110.

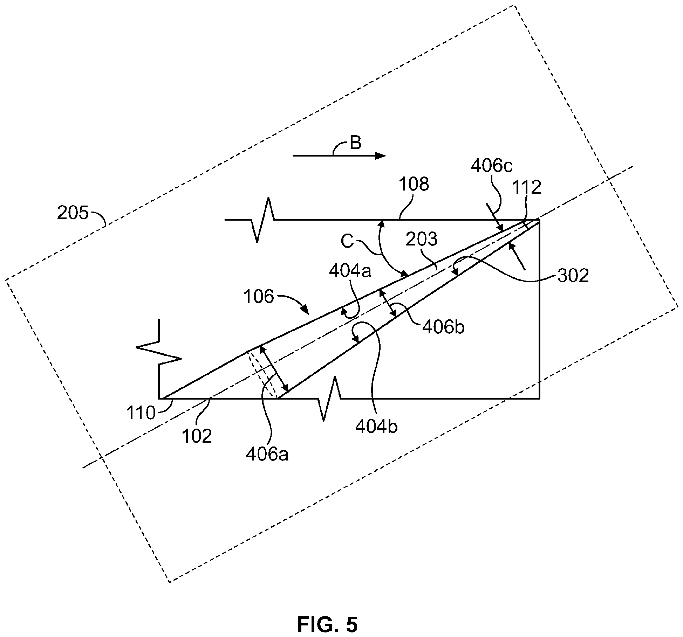

Figure 5 illustrates a side view of the OCD conduit 106 of the airfoil 104 in the constricting plane 205 in accordance with one embodiment. The two-dimensional diffusing plane 207, which is perpendicular to the constricting plane 205, extends into and out of the plane shown in the two-dimensional representation of Figure 5. The interior surface 302 of the OCD conduit 106 is open to the cooling chamber 102 at the interior intersection 110 and open to the exterior surface 108 at the exterior intersection 112. For example, the OCD conduit 106 is an open passage between the cooling chamber 102 and the exterior surface 108.

The OCD conduit 106 is elongated along the intersection 203 of the constricting and diffusing planes 205, 207 between the cooling chamber 102 and the exterior surface 108. The interior surface 302 of the OCD conduit 106 has opposing second portions 404a, 404b. The OCD conduit 106 encompasses the intersection 203 along the constricting plane 205 such that the intersection 203 is generally centered between the opposing second portions 404a, 404b of the interior surface 302. For example, the opposing second portions 404a, 404b are generally mirrored about the intersection 203 between the cooling chamber 102 and the exterior surface 108. Optionally, the second portions 404a, 404b may not be mirrored about the intersection 203.

The OCD conduit 106 has a second distance 406 between the opposing second portions 404a, 404b of the interior surface 302. The second distance 406 decreases in the constricting plane 205 at increasing distances along the intersection 203 in the direction A from the cooling chamber 102 toward the exterior surface 108. For example, the second distance 406 may be the distance measured along the shortest path between opposing second portions 404a, 404b of the interior surface 302 of the OCD conduit 106. This distance 406 may continually decrease at increasing distances along the intersection 203. For example, the second distance 406a may be largest at or near the interior intersection 110, but may decrease at increasing distances along the intersection 203 in the constricting plane 205. The second distance 406b may be smaller at or near the middle of the OCD conduit 106 along the intersection 203, and may be smallest (e.g., as the distance 406c) at or near the exterior intersection 112. For example, the second distance 406a, disposed near the interior intersection 110, has a distance greater than the second distance 406b, and has a distance greater than the second distance 406c (e.g., distance 406a > distance 406b > distance 406c). For example, the second distance 406c, disposed near the exterior intersection 112, has a distance less than the second distance 406b, and has a distance less than the second distance 406a.

The second distance 406 decreases in the constricting plane 205 at increasing distances along the intersection 203 from the cooling chamber 102 toward the exterior surface 108 such that a flow area through which at least some of the cooling air flows in the direction A contracts in the constricting plane 205 along the intersection 203. The cooling air contracts in the constricting plane 205 along the intersection 203 between the cooling chamber 102 and the exterior surface 108. For example, the flow area of the OCD conduit 106 in the constricting plane 205 is greater near the interior intersection 110 than the flow area of the OCD conduit 106 in the constricting plane 205 near the exterior intersection 112.

The OCD conduit 106 is angularly offset from the exterior surface 108 of the airfoil 104 by the radial degree C. For example, the OCD conduit 106 may be angularly offset by less than 90 degrees, less than 75degrees, less than 55 degrees, or the like. The OCD conduit 106 is angularly offset from the exterior surface 108 such that cooling air is directed in the direction A that is downwind from the direction of hot fluid transferring through the turbine assembly in the direction B. For example, the interior intersection 110 is disposed closer to the leading edge (leading edge 118 of Figure 1) of the airfoil than the exterior intersection 112 such that the OCD conduit 106 directs the cooling air in the direction A such that the direction A is downwind from and flows in a direction similar to the direction B of the hot fluid. For example, the vector direction A has at least one vector component with the same or generally the same direction as the vector direction B (e.g., the scalar product A*B >0).

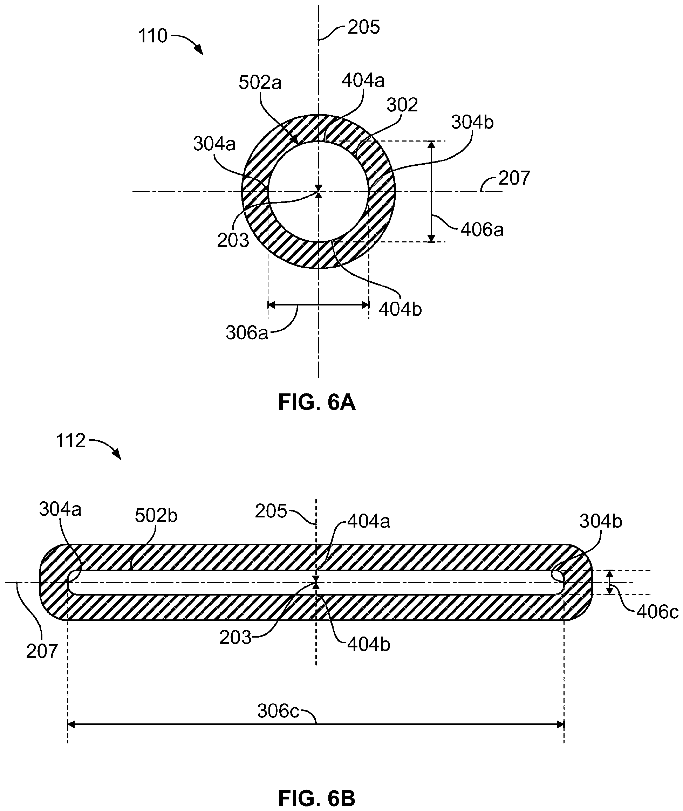

Figure 6A illustrates a front view of the OCD conduit 106 at the interior intersection 110 between the cooling chamber 102 and the OCD conduit 106 centered or substantially centered about the intersection 203 of the constricting plane 205 and the diffusing plane 207 in accordance with one embodiment. Figure 6B illustrates a front view of the OCD conduit 106 at the exterior intersection 112 between the OCD conduit 106 and the exterior surface 108 centered or substantially centered about the intersection 203 of the constricting plane 205 and the diffusing plane 207. For example, Figure 6A illustrates the front view of the cross-sectional shape of the OCD conduit 106 at the interior intersection 110 and Figure 6B illustrates the front view of the cross-sectional shape of the OCD conduit 106 at the exterior intersection 112. Figures 6A and 6B will be discussed in detail together.

In the illustrated embodiment of Figure 6A, the OCD conduit 106 has a first cross-sectional shape 502a at the interior intersection 110 that is generally round. Optionally, the OCD conduit 106 may have any alternative cross-sectional shape and/or size at the interior intersection 110. The OCD conduit 106 has a first area corresponding to the first cross-sectional shape 502a at the interior intersection 110.

At the interior intersection 110, the interior surface 302 has the opposing first portions 304a, 304b that are separated a distance apart by the first distance 306a. Additionally, the interior surface 302 has the opposing second portions 404a, 404b that are separated a distance apart by the second distance 406a. In the illustrated embodiment, the first distance 306a and the second distance 406a extend a generally equal distance. Optionally, the first distance 306a may extend a distance that is greater or less than the second distance 406a at the interior intersection 110. In the illustrated embodiment of Figure 6A, the intersection 203 is generally centered about the opposing first portions 304a, 304b and the opposing second portions 404a, 404b. Alternatively, the intersection 203 may not be generally centered about one or more of the opposing first portions 304a, 304b or the opposing second portions 404a, 404b.

In the illustrated embodiment of Figure 6B, the OCD conduit 106 has a second cross-sectional shape 502b at the exterior intersection 112 that is generally elliptical. Optionally, the OCD conduit 106 may have any alternative cross-sectional shape and/or size at the exterior intersection 112. Figure 6B illustrates the second cross-sectional shape 502b of the OCD conduit 106 at the exterior intersection 112 that is different than the first cross-sectional shape 502a of the OCD conduit 106 at the interior intersection 110 illustrated in Figure 6A.

At the exterior intersection 112, the opposing first portions 304a, 304b are separated a distance apart by the first distance 306c. Additionally, the opposing second portions 404a, 404b are separated a distance apart by the second distance 406c. In the illustrated embodiment, the first distance 306c is greater than the second distance 406c at the exterior intersection 112. In the illustrated embodiment of Figure 6B, the intersection 203 is generally centered about the opposing first portions 304a, 304b and the opposing second portions 404a, 404b. Alternatively, the intersection 203 may not be generally centered about one or more of the opposing first portions 304a, 304b or the opposing second portions 404a, 404b.

The first cross-sectional shape 502a has a first area at the interior intersection, and the second cross-sectional shape 502b has a second area at the exterior intersection 112 that is different than the first area at the interior intersection 110. The first area at the interior intersection 110 is less than the second area at the exterior intersection 112 such that the OCD conduit 106 has an area ratio between the second area and the first area that is at least one. For example, the area ratio between the second area and first area of the OCD conduit 106 may be 1, 2, 3, or greater.

The flow area through which the cooling air flows in a direction from the interior intersection 110 toward the exterior intersection 112 expands with the continual increase of the first distance 306 (e.g., between the distance 306a and distance 306c at increasing distances along the intersection 203 of Figure 4). For example, the flow area expands in the diffusing plane 207 between the cooling chamber 102 and the exterior surface 108. Additionally, the flow area contracts with the continual decrease of the second distance 406 (e.g. between the distance 406a and distance 406c of Figure 5). For example, the flow area contracts in the constricting plane 205 between the cooling chamber 102 and the exterior surface 108.

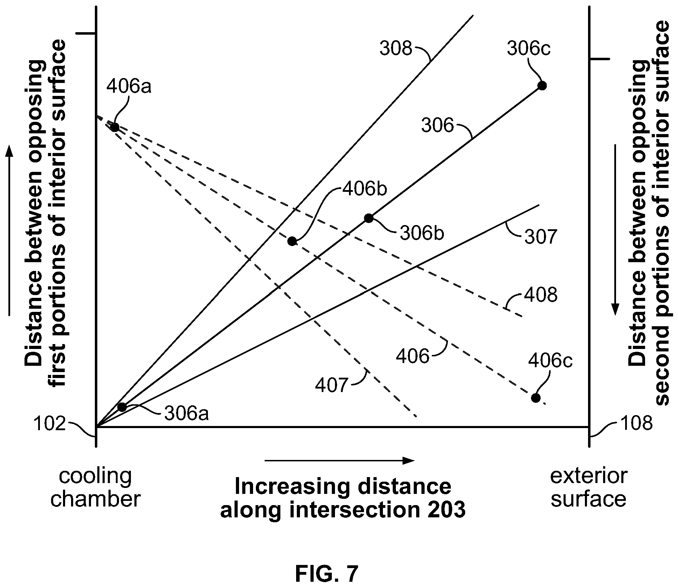

Figure 7 illustrates a chart of the increasing distance along the intersection 203 between the cooling chamber 102 and the exterior surface 108 in accordance with one embodiment. Figure 7 is not drawn to scale and is for illustrative purposes only demonstrating the general increase between opposing first portions 304a, 304b in the diffusing plane and the general decrease between opposing second portions 404a, 404b in the constricting plane of the OCD conduit 106.

The horizontal axis represents the increasing distance along the intersection 203 between the cooling chamber 102 and the exterior surface 108. The left vertical axis represents the increasing distance between opposing first portions 304a, 304b of the interior surface 302 (of Figure 3) of the OCD conduit 106. The right vertical axis represents the decreasing distance between opposing second portions 404a, 404b of the interior surface 302 (of Figure 4) of the OCD conduit 106.

The first distance 306 increases at increasing distances along the intersection 203 between the cooling chamber 102 and the exterior surface 108 in the diffusing plane 207 (of Figure 3). For example, first distances 306a, 306b and 306c (of Figure 3) between opposing first portions 304a, 304b are illustrated as continually increasing at increasing distances along the intersection 203. The first distance 306a at or near the cooling chamber 102 is smaller than the first distance 306c at or near the exterior surface 108. Additionally or alternatively, the first distance 306 may increase at a slower rate (e.g., illustrated by line 307) or a faster rate (e.g., illustrated by line 308) at increasing distances along the intersection 203. The first distance 306 is illustrated as linearly increasing. Optionally, the first distance 306 may increase non-linearly (not shown) at increasing distances along the intersection 203.

The second distance 406 decreases at increasing distances along the intersection 203 between the cooling chamber 102 and the exterior surface 108 in the constricting plane 205 (of Figure 4). For example, the second distances 406a, 406b and 406c (of Figure 4) between opposing second portions 404a, 404b are illustrated as continually decreasing at increasing distances along the intersection 203. The second distance 406a at or near the cooling chamber 102 is larger than the second distance 406c at or near the exterior surface 108. Additionally or alternatively, the second distance 406 may decrease at a slower rate (e.g., illustrated by line 407) or a faster rate (e.g., illustrated by line 408) at increasing distances along the intersection 203. The second distance 406 is illustrated as linearly decreasing. Optionally, the second distance 406 may decrease non-linearly (not shown) at increasing distances along the intersection 203.

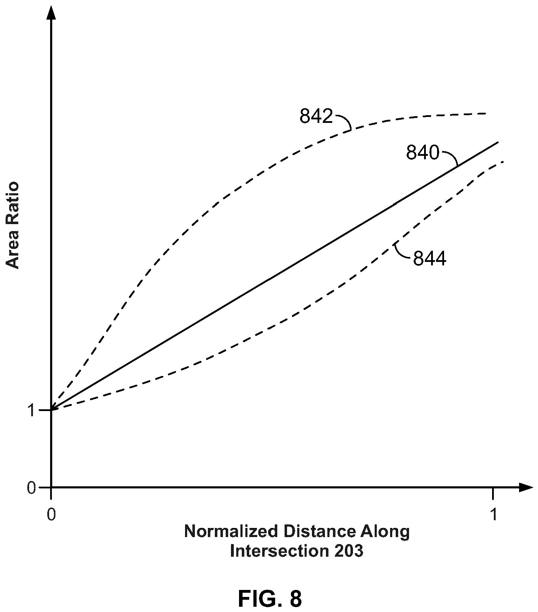

Figure 8 illustrates an area ratio graph of the OCD conduit 106 along the intersection 203 in accordance with one embodiment. The horizontal axis represents a normalized distance between the cooling chamber and the exterior surface along the intersection 203. The left vertical axis represents the area ratio between the cross-sectional shape of the OCD conduit 106 at varying positions along the intersection 203. Line 840 illustrates the increasing area ratio between the cross-sectional shapes 502a, 502b of Figures 6A and 6B. Alternatively, the area ratio of the OCD conduit 106 may increase and or decrease at linear or non-linear rates at increasing distances along the intersection 203. For example, line 842 represents an OCD conduit having a generally increasing followed by a generally decreasing area ratio between the interior intersection and the exterior intersection. Alternatively, line 844 represents an OCD conduit having a generally decreasing followed by a generally increasing area ratio between the interior intersection and the exterior intersection. Alternatively, the OCD conduit may expand and/or contract in one or more of the constricting plane 205 or diffusing plane 207 along the intersection 203.

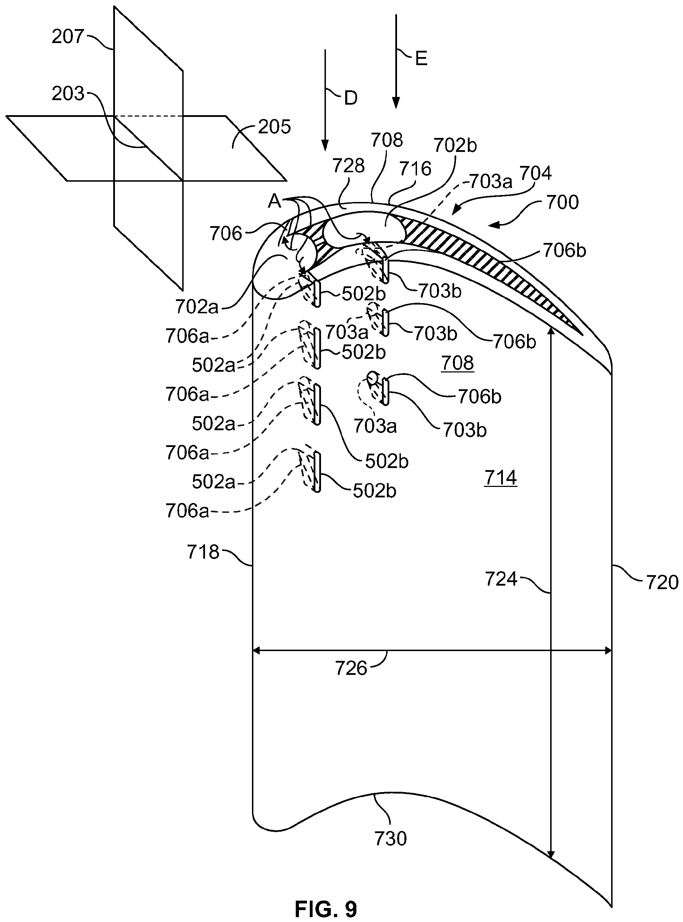

Figure 9 illustrates a perspective view of a cooling assembly 700 of a turbine assembly (e.g., the turbine assembly 10 of Figure 1) in accordance with one embodiment. The cooling assembly 700 may operate to help cool an airfoil 704 of the turbine assembly (or another component of the turbine assembly). The airfoil 704 may be a turbine blade, a stationary guide vane, or the like, used in the turbine assembly 10. The airfoil 704 has a pressure side 714 and a suction side 716 (corresponding to the pressure and suction sides 114, 116 of Figure 1) that are interconnected by a leading edge 718 and a trailing edge 720. The airfoil 704 extends an axial length 726 between the leading edge 718 and the trailing edge 720. The trailing edge 720 is disposed proximate a shaft of the turbine assembly relative to the leading edge 718 along the axial length 726. The airfoil 704 extends a radial length 724 between a first end 728 and a second end 730. For example, the axial length 726 is generally perpendicular to the radial length 724.

The airfoil 704 has two internal cooling chambers 702a, 702b entirely contained within the airfoil 704 between the pressure and suction sides 714, 716. Optionally, the airfoil 704 may include any number of cooling chambers. One or more orthogonally converging diffusing (OCD) conduits 706 (corresponding to the OCD conduit 106) fluidly couple the cooling chambers 702 with the exterior of the airfoil 704 (e.g., with an exterior surface 708) on one or more of the pressure side 714 or the suction side 716. The OCD conduits 706 directs at least some of the cooling air out of the cooling chambers 702 outside of the exterior surface 708 of the airfoil 704. The OCD conduits 706 are elongated along and encompass an intersection of a constricting plane and a diffusing plane (corresponding to the intersection 203, constricting plane 205 and diffusing plane 207 of Figure 3).

The OCD conduits 706 are arranged in columns along the radial length 724 of the airfoil 704. For example, a first column D includes four OCD conduits (706a), and a second column E includes three OCD conduits (706b). Optionally, the airfoil 704 may include one or more columns having one or more OCD conduits fluidly coupling internal cooling chambers 702a, 702b with the exterior surface 708 of the airfoil 704. For example, the first column D may include more or less than four OCD conduits 706a and/or the second column E may include more or less than three OCD conduits 706b. Optionally, the OCD conduits 706a, 706b may be arranged in any pattern or random configuration along the radial length 724 and/or the axial length 726 of the airfoil 704.

In the illustrated embodiment, the OCD conduits 706a within the first column D have a first cross-sectional shape 502a at the interior intersection (corresponding to the first cross-sectional shape 502a of Figure 6A) and a second cross-sectional shape 502b at the exterior intersection (corresponding to the second cross-sectional shape 502b of Figure 6B) that is different than the first cross-sectional shape 502a. The flow area contracts in the constricting plane 205 and expands in the diffusing plane 207 as cooling air flows between the cooling chambers 702 and the exterior surface 708.

The OCD conduits 706b within the second column E have a first cross-sectional shape 703a at the interior intersection and a second cross-sectional shape 703b at the exterior intersection that is different than the first cross-sectional shape 703a. The first cross-sectional shape 703a of the OCD conduits 706b (e.g., of column E) is different than the first cross-sectional shape 502a of the OCD conduits 706a (e.g., of column D). For example, the cross-sectional shape 703a may be generally elliptical, wherein the cross-sectional shape 502a may be generally round. Optionally, the cross-sectional shapes 502a, 703a may be uniform. Additionally, the second cross-sectional shape 703b of the OCD conduits 706b (e.g., of column E) is different than the second cross-sectional shape 502b of the OCD conduits 706a (e.g., of column D). Optionally, the second cross-sectional shapes 502b, 703b may be uniform. Alternatively or additionally, each OCD conduit may have a unique first and/or second cross-sectional shape. Optionally, the OCD conduits within columns along the axial length 726 may have unique and/or uniform first and second cross-sectional shapes. Optionally, any combination (e.g., pattern, random, of the like) of unique and/or uniform cross-sectional shapes may be present.

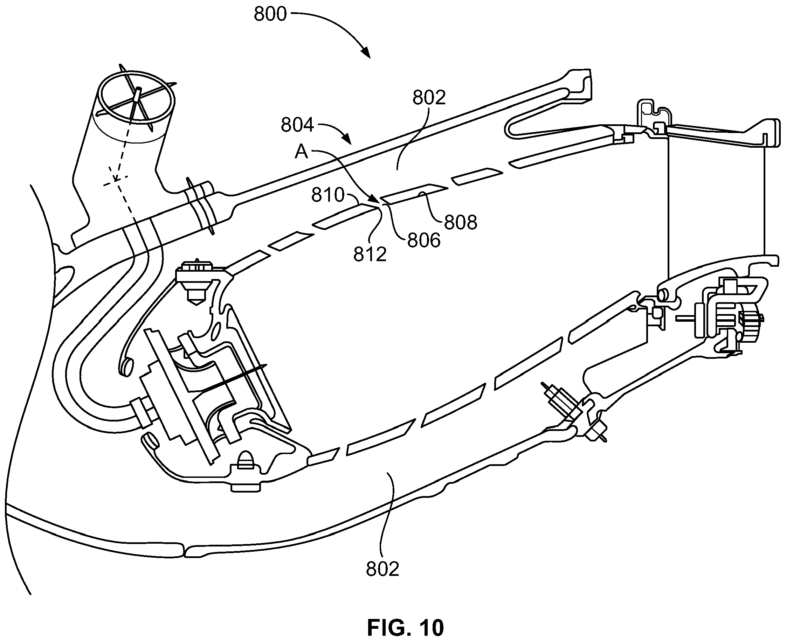

Figure 10 illustrates a cross-sectional partial view of a cooling assembly 800 of a combustion chamber 804 in accordance with one embodiment. The combustion chamber 804 comprises a cooling chamber 802 disposed within the combustion chamber 804. The cooling chamber 802 is fluidly coupled with an exterior surface 808 by an orthogonally converging diffusing (OCD) conduit 806. In the illustrated embodiment, the combustion chamber 804 includes multiple OCD conduits 806 fluidly coupling the cooling chamber 802 with the exterior surface 808. Optionally, the combustion chamber may include one or more OCD conduits 806 fluidly coupling the cooling chamber with the exterior surface. Optionally, the combustion chamber may include one or more additional OCD conduits 806 fluidly coupling an additional interior chamber of the combustion chamber with one or more liners of the combustion chamber, or the like. The OCD conduit 806 (corresponding to the OCD conduit 106) is a passage that is disposed between and fluidly couples the cooling chamber 802 with the exterior surface 808. The OCD conduit 806 directs at least some of the cooling air exiting the cooling chamber 802 in a direction A outside of the exterior surface 808. The OCD conduit 806 is open at an interior intersection 810 between the OCD conduit 806 and the cooling chamber 802, and is open at an exterior intersection 812 between the OCD conduit 806 and the exterior surface 808.

The OCD conduit 806 is elongated along and encompasses an intersection (corresponding to the intersection 203) of a constricting plane and a diffusing plane that is traverse to the constricting plane. For example, the OCD conduit 806 is elongated along the intersection between the cooling chamber 802 and the exterior surface 808. Additionally, the OCD conduit 806 encompasses the intersection of the constricting and diffusing planes between the cooling chamber 802 and the exterior surface 806. For example, the intersection may extend through the center of the OCD conduit 806, with the OCD conduit 806 being symmetric or substantially symmetric about or on either side of the intersection in the constricting plane. The OCD conduit 806 also may be symmetric or substantially symmetric about or on either side of the intersection in the diffusing plane.

The flow area through which the cooling air flows in the direction A from the interior intersection 810 toward the exterior intersection 812 expands in the diffusing plane between the cooling chamber 802 and the exterior surface 808 along the intersection. Additionally, the flow area through which the cooling air flows contacts in the constricting plane between the cooling chamber 802 and the exterior surface 808 along the intersection.

In the illustrated embodiment, the combustion chamber 804 has one OCD conduit 806. Optionally, the combustion chamber 804 may comprise one or more OCD conduits 806 fluidly coupling the cooling chamber 802 with the exterior surface 808 at any other location.

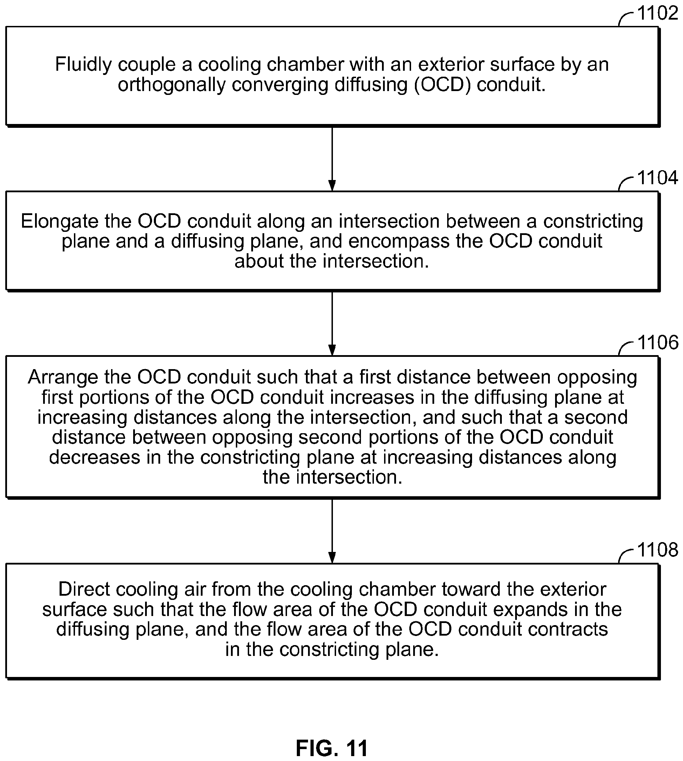

Figure 11 illustrates a method flowchart of operation of a cooling assembly (e.g., the cooling assemblies 100, 700, 800) operating to help cool an airfoil (e.g., airfoils 104, 704) and/or a combustion chamber (e.g., combustion chamber 804) of a turbine assembly in accordance with one embodiment. At 1102, a cooling chamber (e.g. the cooling chamber 102) is fluidly coupled with an exterior surface (e.g., exterior surface 108) of one or more of the airfoil or combustion chamber of the turbine assembly by an orthogonally converging diffusing (OCD) conduit (e.g., the OCD conduit 106).

At 1104, the OCD conduit is elongated along an intersection between a constricting plane and a diffusing plane (e.g., intersection 203 between the constricting plane 205 and diffusing plane 207). The constricting and diffusing planes are two-dimensional perpendicular planes. The OCD conduit is elongated along the intersection between the cooling chamber and the exterior surface. Additionally, the OCD conduit encompasses the intersection between the constricting and diffusing planes. For example, the OCD conduit is generally symmetric about or on either side of the intersection between the constricting and diffusing planes between the cooling chamber and the exterior surface of the airfoil or combustion chamber.

At 1106, the OCD conduit is arranged such that a first distance between opposing first portions (e.g., first portions 304a, 304b) of an interior surface of the OCD conduit increases in the diffusing plane at increasing distances along the intersection between the cooling chamber and the exterior surface (e.g., continually increasing distance 306). Additionally, the OCD conduit is arranged such that a second distance between opposing second portions (e.g., second portions 404a, 404b) of the interior surface of the OCD conduit decreases in the constricting plane at increasing distances along the intersection between the cooling chamber and the exterior surface (e.g., continually decreasing distance 406).

At 1108, cooling air is directed from the cooling chamber through the OCD conduit toward the exterior surface of the airfoil or combustion chamber. The flow area of the OCD conduit expands in the diffusing plane between the cooling chamber and the exterior surface. Additionally, the flow area of the OCD conduit contracts in the constricting plane between the cooling chamber and the exterior surface. For example, the cooling air expands in the diffusing plane and contracts in the constricting plane as the cooling air is directed from the cooling chamber towards the exterior surface.

In one embodiment, a cooling assembly comprises a cooling chamber disposed inside a turbine assembly. The cooling chamber is configured to direct cooling air inside one or more of a combustion chamber or an airfoil of the turbine assembly. An orthogonally converging diffusing (OCD) conduit is fluidly coupled with the cooling chamber. The OCD conduit is configured to direct at least some of the cooling air out of the cooling chamber outside of an exterior surface of the one or more of the combustion chamber or the airfoil. The OCD conduit is elongated along and encompasses an intersection between a constricting plane and a diffusing plane that are traverse to each other. The OCD conduit has an interior surface with a first distance between opposing first portions of the interior surface. The first distance increases in the diffusing plane at increasing distances along the intersection from the cooling chamber toward the exterior surface. The interior surface of the OCD conduit has a second distance between opposing second portions of the interior surface of the OCD conduit. The second distance between opposing second portions decreases in the constricting plane at the increasing distances along the intersection from the cooling chamber toward the exterior surface.

Optionally, the second distance between the opposing second portions of the interior surface of the OCD conduit decreases in the constricting plane toward the exterior surface, such that a flow area through which the at least some of the cooling air flows contracts along the constricting plane from the cooling chamber toward the exterior surface.

Optionally, the second distance at an interior intersection between the OCD conduit and the cooling chamber is greater than a second distance at an exterior intersection between the OCD conduit and the exterior surface in the constricting plane along the intersection.

Optionally, the OCD conduit is configured to direct the at least some of the cooling air exiting the cooling chamber along the exterior surface of the one or more of the combustion chamber or the airfoil.

Optionally, the constricting plane is angularly offset from the exterior surface of the one or more of the combustion chamber or the airfoil. Optionally, the diffusing plane is perpendicular to the constricting plane.

Optionally, the first distance between the opposing first portions of the interior intersection of the OCD conduit at an interior intersection between the OCD conduit and the cooling chamber is shorter than the first distance at an exterior intersection between the OCD conduit and the exterior surface.

Optionally, the OCD conduit comprises a first cross-sectional shape at an interior intersection between the OCD conduit and the cooling chamber, and the OCD conduit comprises a different second cross-sectional shape at an exterior intersection between the OCD conduit and the exterior surface. The first cross-sectional shape has a first area and the second cross-sectional shape has a second area that is different than the first area. Optionally, the first area is less than the second area such that the OCD conduit has an area ratio between the second area and the first area of at least one.

Optionally, the cooling assembly comprises one or more additional OCD conduits. The one or more additional OCD conduits comprise alternative first cross-sectional shapes and alternative second cross-sectional shapes. Optionally, the first cross-sectional shape of the OCD conduit at the interior intersection is different than a first cross-sectional shape of the one or more additional OCD conduits at the interior intersection. The second cross-sectional shape of the OCD conduit at the exterior intersection is different than a second cross-sectional shape of the one or more additional OCD conduits at the exterior intersection.

In one embodiment, a cooling assembly comprises a cooling chamber disposed inside a turbine assembly. The cooling chamber is configured to direct cooling air inside one or more of a combustion chamber or an airfoil of the turbine assembly. An orthogonally converging diffusing (OCD) conduit is fluidly coupled with the cooling chamber. The OCD conduit is configured to direct at least some of the cooling air out of the cooling chamber outside of an exterior surface of the one or more of the combustion chamber or the airfoil. The OCD conduit is elongated along and encompasses an intersection between a constricting plane and a diffusing plane that are traverse to each other. The OCD conduit has an interior surface with a first distance between opposing first portions of the interior surface. The first distance increases in the diffusing plane at increasing distances along the intersection from the cooling chamber toward the exterior surface. The interior surface of the OCD conduit has a second distance between opposing second portions of the interior surface of the OCD conduit. The second distance between opposing second portions decreases in the constricting plane at the increasing distances along the intersection from the cooling chamber toward the exterior surface. The OCD conduit comprises a first cross-sectional shape at an interior intersection between the OCD conduit and the cooling chamber, and the OCD conduit comprises a different second cross-sectional shape at an exterior intersection between the OCD conduit and the exterior surface. The first cross-sectional shape has a first area and the second cross-sectional shape has a second area that is different than the first area.

Optionally, a flow area through which the at least some of the cooling air flows contracts along the constricting plane from the cooling chamber toward the exterior surface.

Optionally, the OCD conduit is configured to direct the at least some of the cooling air exiting the cooling chamber along the exterior surface of the one or more of the combustion chamber or the airfoil.

Optionally, the constricting plane is angularly offset from the exterior surface of the one or more of the combustion chamber or the airfoil.

Optionally, the first area is less than the second area such that the OCD conduit has an area ratio between the second area and the first area of at least one.

Optionally, the cooling assembly further comprises one or more additional OCD conduits. The one or more additional OCD conduits comprise alternative first cross-sectional shapes and alternative second cross-sectional shapes.

In one embodiment, a cooling assembly comprises a cooling chamber disposed inside a turbine assembly. The cooling chamber is configured to direct cooling air inside one or more of a combustion chamber or an airfoil of the turbine assembly. An orthogonally converging diffusing (OCD) conduit is fluidly coupled with the cooling chamber. The OCD conduit is configured to direct at least some of the cooling air out of the cooling chamber outside of an exterior surface of the one or more of the combustion chamber or the airfoil. The OCD conduit is elongated along and encompasses an intersection between a constricting plane and a diffusing plane that are traverse to each other. The OCD conduit has an interior surface with a first distance between opposing first portions of the interior surface. The first distance increases in the diffusing plane at increasing distances along the intersection from the cooling chamber toward the exterior surface such that a flow area through which at least some of the cooling air flows expands in the diffusing plane along the intersection between the cooling chamber toward the exterior surface. The interior surface of the OCD conduit has a second distance between opposing second portions of the interior surface of the OCD conduit. The second distance between the opposing second portions decreases in the constricting plane at the increasing distances along the intersection from the cooling chamber toward the exterior surface such that the flow are through which the at least some of the cooling air flows contracts in the constricting plane along the intersection between the cooling chamber toward the exterior surface.

Optionally, the OCD conduit comprises a first cross-sectional shape at an interior intersection between the OCD conduit and the cooling chamber, and the OCD conduit comprises a different second cross-sectional shape at an exterior intersection between the OCD conduit and the exterior surface. The first cross-sectional shape has a first area and the second cross-sectional shape has a second area that is different than the first area.

Optionally, the first area is less than the second area such that the OCD conduit has an area ratio between the second area and the first area of at least one.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose several embodiments of the subject matter set forth herein, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A cooling assembly comprising:
   a cooling chamber disposed inside a turbine assembly, the cooling chamber configured to direct cooling air inside one or more of a combustion chamber or an airfoil of the turbine assembly;
   an orthogonally converging diffusing (OCD) conduit fluidly coupled with the cooling chamber, the OCD conduit configured to direct at least some of the cooling air out of the cooling chamber outside of an exterior surface of the one or more of the combustion chamber or the airfoil;
   wherein the OCD conduit is elongated along and encompasses an intersection between a constricting plane and a diffusing plane that are transverse to each other, the OCD conduit having an interior surface with a first distance between opposing first portions of the interior surface, the first distance increasing in the diffusing plane at increasing distances along the intersection from the cooling chamber toward the exterior surface; and
   wherein the interior surface of the OCD conduit has a second distance between opposing second portions of the interior surface of the OCD conduit, the second distance between opposing second portions decreasing in the constricting plane at the increasing distances along the intersection from the cooling chamber toward the exterior surface.
2. The cooling assembly of clause 1, wherein the second distance between the opposing second portions of the interior surface of the OCD conduit decreases in the constricting plane toward the exterior surface, such that a flow area through which the at least some of the cooling air flows contracts along the constricting plane from the cooling chamber toward the exterior surface.
3. The cooling assembly of any preceding clause, wherein the second distance at an interior intersection between the OCD conduit and the cooling chamber is greater than the second distance at an exterior intersection between the OCD conduit and the exterior surface in the constricting plane along the intersection.
4. The cooling assembly of any preceding clause, wherein the OCD conduit is configured to direct the at least some of the cooling air exiting the cooling chamber along the exterior surface of the one or more of the combustion chamber or the airfoil.
5. The cooling assembly of any preceding clause, wherein the constricting plane is angularly offset from the exterior surface of the one or more of the combustion chamber or the airfoil.
6. The cooling assembly of any preceding clause, wherein the diffusing plane is perpendicular to the constricting plane.
7. The cooling assembly of any preceding clause, wherein the first distance between the opposing first portions of the interior surface of the OCD conduit at an interior intersection between the OCD conduit and the cooling chamber is shorter than the first distance at an exterior intersection between the OCD conduit and the exterior surface.
8. The cooling assembly of any preceding clause, wherein the OCD conduit comprises a first cross-sectional shape at an interior intersection between the OCD conduit and the cooling chamber, and the OCD conduit comprises a different second cross-sectional shape at an exterior intersection between the OCD conduit and the exterior surface, wherein the first cross-sectional shape has a first area and the second cross-sectional shape has a second area that is different than the first area.
9. The cooling assembly of any preceding clause, wherein the first area is less than the second area such that the OCD conduit has an area ratio between the second area and the first area of at least one.
10. The cooling assembly of any preceding clause, further comprising one or more additional OCD conduits, wherein the one or more additional OCD conduits comprise alternative first cross-sectional shapes and alternative second cross-sectional shapes.
11. The cooling assembly of any preceding clause, wherein the first cross-sectional shape of the OCD conduit at the interior intersection is different than a first cross-sectional shape of the one or more additional OCD conduits at the interior intersection, and wherein the second cross-sectional shape of the OCD conduit at the exterior intersection is different than a second cross-sectional shape of the one or more additional OCD conduits at the exterior intersection.
12. A cooling assembly comprising:
   a cooling chamber disposed inside a turbine assembly, the cooling chamber configured to direct cooling air inside one or more of a combustion chamber or an airfoil of the turbine assembly;
   an orthogonally converging diffusing (OCD) conduit fluidly coupled with the cooling chamber, the OCD conduit configured to direct at least some of the cooling air out of the cooling chamber outside of an exterior surface of the one or more of the combustion chamber or the airfoil;
   wherein the OCD conduit is elongated along and encompasses an intersection between a constricting plane and a diffusing plane that are transverse to each other, the OCD conduit having an interior surface with a first distance between opposing first portions of the interior surface, the first distance increasing in the diffusing plane at increasing distances along the intersection from the cooling chamber toward the exterior surface;
   wherein the interior surface of the OCD conduit has a second distance between opposing second portions of the interior surface of the OCD conduit, the second distance between the opposing second portions decreasing in the constricting plane at the increasing distances along the intersection from the cooling chamber toward the exterior surface; and
   wherein the OCD conduit comprises a first cross-sectional shape at an interior intersection between the OCD conduit and the cooling chamber, and the OCD conduit comprises a different second cross-sectional shape at an exterior intersection between the OCD conduit and the exterior surface, wherein the first cross-sectional shape has a first area and the second cross-sectional shape has a second area that is different than the first area.
13. The cooling assembly of any preceding clause, wherein a flow area through which the at least some of the cooling air flows contracts along the constricting plane from the cooling chamber toward the exterior surface.
14. The cooling assembly of any preceding clause, wherein the OCD conduit is configured to direct the at least some of the cooling air exiting the cooling chamber along the exterior surface of the one or more of the combustion chamber or the airfoil.
15. The cooling assembly of any preceding clause, wherein the constricting plane is angularly offset from the exterior surface of the one or more of the combustion chamber or the airfoil.
16. The cooling assembly of any preceding clause, wherein the first area is less than the second area such that the OCD conduit has an area ratio between the second area and the first area of at least one.
17. The cooling assembly of any preceding clause, further comprising one or more additional OCD conduits, wherein the one or more additional OCD conduits comprise alternative first cross-sectional shapes and alternative second cross-sectional shapes.
18. A cooling assembly comprising:
   a cooling chamber disposed inside a turbine assembly, the cooling chamber configured to direct cooling air inside one or more of a combustion chamber or an airfoil of the turbine assembly;
   an orthogonally converging diffusing (OCD) conduit fluidly coupled with the cooling chamber, the OCD conduit configured to direct at least some of the cooling air out of the cooling chamber outside of an exterior surface of the one or more of the combustion chamber or the airfoil;
   wherein the OCD conduit is elongated along and encompasses an intersection between a constricting plane and a diffusing plane that are transverse to each other, the OCD conduit having an interior surface with a first distance between opposing first portions of the interior surface, the first distance increasing in the diffusing plane at increasing distances along the intersection from the cooling chamber toward the exterior surface such that a flow area through which the at least some of the cooling air flows expands in the diffusing plane along the intersection between the cooling chamber toward the exterior surface; and
   wherein the interior surface of the OCD conduit has a second distance between opposing second portions of the interior surface of the OCD conduit, the second distance between the opposing second portions decreasing in the constricting plane at the increasing distances along the intersection from the cooling chamber toward the exterior surface such that the flow area through which the at least some of the cooling air flows contracts in the constricting plan along the intersection between the cooling chamber toward the exterior surface.
19. The cooling assembly of any preceding clause, wherein the OCD conduit comprises a first cross-sectional shape at an interior intersection between the OCD conduit and the cooling chamber, and the OCD conduit comprises a different second cross-sectional shape at an exterior intersection between the OCD conduit and the exterior surface, wherein the first cross-sectional shape has a first area and the second cross-sectional shape has a second area that is different than the first area.
20. The cooling assembly of any preceding clause, wherein the first area is less than the second area such that the OCD conduit has an area ratio between the second area and the first area of at least one.

## Claims

1. A cooling assembly (100) comprising:
a cooling chamber (102) disposed inside a turbine assembly (10), the cooling chamber (102) configured to direct cooling air inside one or more of a combustion chamber (804) or an airfoil (104) of the turbine assembly;
an orthogonally converging diffusing (OCD) conduit (106) fluidly coupled with the cooling chamber (102), the OCD conduit configured to direct at least some of the cooling air out of the cooling chamber outside of an exterior surface (108) of the one or more of the combustion chamber (804) or the airfoil (104);
wherein the OCD conduit (106) is elongated along and encompasses an intersection (203) between a constricting plane (205) and a diffusing plane (207) that are transverse to each other, the OCD conduit having an interior surface (302) with a first distance (306) between opposing first portions (304) of the interior surface, the first distance (306) increasing in the diffusing plane (207) at increasing distances along the intersection (203) from the cooling chamber (102) toward the exterior surface (108); and
wherein the interior surface (302) of the OCD conduit (106) has a second distance (406) between opposing second portions (404) of the interior surface of the OCD conduit, the second distance (406) between opposing second portions decreasing in the constricting plane (205) at the increasing distances along the intersection (203) from the cooling chamber (102) toward the exterior surface (108).

2. The cooling assembly (100) of claim 1, wherein the second distance (406) between the opposing second portions (404) of the interior surface (302) of the OCD conduit (106) decreases in the constricting plane (205) toward the exterior surface (108), such that a flow area through which the at least some of the cooling air flows contracts along the constricting plane (205) from the cooling chamber (102) toward the exterior surface (108).

3. The cooling assembly (100) of claim 1, wherein the second distance (406) at an interior intersection (110) between the OCD conduit (106) and the cooling chamber (102) is greater than the second distance (406) at an exterior intersection (112) between the OCD conduit (106) and the exterior surface (108) in the constricting plane (205) along the intersection (203).

4. The cooling assembly (100) of claim 1, 2 or 3 wherein the OCD conduit (106) is configured to direct the at least some of the cooling air exiting the cooling chamber (102) along the exterior surface (108) of the one or more of the combustion chamber (804) or the airfoil (104).

5. The cooling assembly (100) of any preceding claim, wherein the constricting plane (205) is angularly offset from the exterior surface (108) of the one or more of the combustion chamber (804) or the airfoil (104).

6. The cooling assembly (100) of any preceding claim, wherein the diffusing plane (207) is perpendicular to the constricting plane (205).

7. The cooling assembly (100) of any preceding claim, wherein the first distance (306) between the opposing first portions (304) of the interior surface (302) of the OCD conduit (106) at an interior intersection (110) between the OCD conduit (106) and the cooling chamber (102) is shorter than the first distance (306) at an exterior intersection (112) between the OCD conduit (106) and the exterior surface (108).

8. The cooling assembly (100) of any preceding claim, wherein the OCD conduit (106) comprises a first cross-sectional shape (502a) at an interior intersection (110) between the OCD conduit and the cooling chamber (102), and the OCD conduit comprises a different second cross-sectional shape (502b) at an exterior intersection (112) between the OCD conduit and the exterior surface (108), wherein the first cross-sectional shape (502a) has a first area and the second cross-sectional shape (502b) has a second area that is different than the first area.

9. The cooling assembly (100) of claim 8, wherein the first area is less than the second area such that the OCD conduit (106) has an area ratio between the second area and the first area of at least one.

10. The cooling assembly (700) of claim 8 or 9, further comprising one or more additional OCD conduits (706b), wherein the one or more additional OCD conduits (706b) comprise alternative first cross-sectional shapes (703a) and alternative second cross-sectional shapes (703b).

11. The cooling assembly (700) of claim 10, wherein the first cross-sectional shape (502a) of the OCD conduit (706a) at the interior intersection (110) is different than a first cross-sectional shape (703a) of the one or more additional OCD conduits (706b) at the interior intersection (110), and wherein the second cross-sectional shape (502b) of the OCD conduit (706a) at the exterior intersection (112) is different than a second cross-sectional shape (703b) of the one or more additional OCD conduits (706b) at the exterior intersection (112).

12. A cooling assembly (100) comprising:
a cooling chamber (102) disposed inside a turbine assembly (10), the cooling chamber configured to direct cooling air inside one or more of a combustion chamber (804) or an airfoil (104) of the turbine assembly;
an orthogonally converging diffusing (OCD) conduit (106) fluidly coupled with the cooling chamber (102), the OCD conduit configured to direct at least some of the cooling air out of the cooling chamber outside of an exterior surface (108) of the one or more of the combustion chamber (804) or the airfoil (104);
wherein the OCD conduit (106) is elongated along and encompasses an intersection (203) between a constricting plane (205) and a diffusing plane (207) that are transverse to each other, the OCD conduit having an interior surface (302) with a first distance (306) between opposing first portions (304) of the interior surface (302), the first distance increasing in the diffusing plane at increasing distances along the intersection from the cooling chamber (102) toward the exterior surface (108);
wherein the interior surface (302) of the OCD conduit (106) has a second distance (406) between opposing second portions (404) of the interior surface of the OCD conduit, the second distance between the opposing second portions decreasing in the constricting plane (205) at the increasing distances along the intersection (203) from the cooling chamber (102) toward the exterior surface (108); and
wherein the OCD conduit (106) comprises a first cross-sectional shape (502a) at an interior intersection (110) between the OCD conduit and the cooling chamber (102), and the OCD conduit comprises a different second cross-sectional shape (502b) at an exterior intersection (112) between the OCD conduit and the exterior surface (108), wherein the first cross-sectional shape has a first area and the second cross-sectional shape has a second area that is different than the first area.

13. A cooling assembly (100) comprising:
a cooling chamber (102) disposed inside a turbine assembly (10), the cooling chamber configured to direct cooling air inside one or more of a combustion chamber (804) or an airfoil (104) of the turbine assembly;
an orthogonally converging diffusing (OCD) conduit (106) fluidly coupled with the cooling chamber (102), the OCD conduit configured to direct at least some of the cooling air out of the cooling chamber outside of an exterior surface (108) of the one or more of the combustion chamber (804) or the airfoil (104);
wherein the OCD conduit (106) is elongated along and encompasses an intersection (203) between a constricting plane (205) and a diffusing plane (207) that are transverse to each other, the OCD conduit having an interior surface (302) with a first distance (306) between opposing first portions (304) of the interior surface, the first distance increasing in the diffusing plane at increasing distances along the intersection from the cooling chamber (102) toward the exterior surface (108) such that a flow area through which the at least some of the cooling air flows expands in the diffusing plane along the intersection between the cooling chamber toward the exterior surface; and
wherein the interior surface (302) of the OCD conduit (106) has a second distance (406) between opposing second portions (404) of the interior surface of the OCD conduit, the second distance between the opposing second portions decreasing in the constricting plane (205) at the increasing distances along the intersection (203) from the cooling chamber (102) toward the exterior surface (108) such that the flow area through which the at least some of the cooling air flows contracts in the constricting plan along the intersection between the cooling chamber toward the exterior surface.

14. The cooling assembly (100) of claim 13, wherein the OCD conduit (106) comprises a first cross-sectional shape (502a) at an interior intersection (110) between the OCD conduit and the cooling chamber (102), and the OCD conduit comprises a different second cross-sectional shape (502b) at an exterior intersection (112) between the OCD conduit and the exterior surface (108), wherein the first cross-sectional shape has a first area and the second cross-sectional shape has a second area that is different than the first area.

15. The cooling assembly (100) of claim 13 or 14, wherein the first area is less than the second area such that the OCD conduit (106) has an area ratio between the second area and the first area of at least one.
